# DEMANDE DE BREVET EUROPEEN

(11) **EP 1 106 211 A1**
(43) Date de publication de la demande: **13.06.2001**
(21) Numéro de dépôt: 00403328.8
(22) Date de dépôt: 29.11.2000
(51) Int. Cl.: A62B 35/04, F16F 7/09

(54) **Dispositif de freinage progressif de la chute d'une charge, et ligne de vie équipée d'un tel dispositif.**

(30) Priorité: 30.11.1999 FR 9915040
(71) Demandeur: TRACTEL S.A., 93100 Montreuil (FR)
(72) Inventeur: Timmermans, Francis, 10000 Troyes (FR)
(74) Mandataire: Hud, Robert

(57) **Abrégé**

L'ancrage d'extrémité 1, pour une ligne de vie à laquelle est relié un utilisateur, est constitué par un ensemble monobloc comprenant un socle 4 se poursuivant par un élément de réception en polyuréthanne fait de deux parties renflées 6 parallèles. L'extrémité d'un câble 2 traverse chaque partie renflée 6 en passant dans un logement longitudinal 8 d'une partie conique de la partie renflée 6. Une pièce mobile 11 traversée par le câble 2 est appliquée par l'extrémité de ce câble contre l'extrémité ouverte du logement 8. En cas de chute de l'utilisateur, une traction est appliquée au câble 2 qui introduit et fait coulisser la pièce 11 à l'intérieur du logement 8 en déformant celui-ci et assurant le freinage de la chute.

## Description

L'invention concerne un dispositif de freinage de la chute d'une charge, en particulier de la chute d'une personne reliée au dispositif.

On connaît des systèmes pour freiner et stopper la chute d'une charge, spécialement d'une personne, constitués par un dispositif dans lequel une pièce mobile, à laquelle une charge est reliée, s'engage dans un tube sous l'effet d'une brusque accélération de cette charge. Ce tube, pour l'obtention du freinage, a une section transversale inférieure à la section transversale de la pièce mobile, de sorte que celle-ci exerce, en s'introduisant dans le tube, une force radiale se traduisant par un élargissement de la section du tube sur la longueur de celui-ci parcourue par la pièce mobile. Ce tube a une consistance et est dimensionné pour que son élargissement sur une longueur donnée nécessite un travail absorbant l'énergie provoquée par la chute de la charge, et aboutissant ainsi à stopper cette chute.

Un tel dispositif est utilisé notamment dans des équipements de ligne de vie comportant un câble sensiblement horizontal fixé à deux ancrages d'extrémité, et sur lequel circule un ancrage mobile auquel un utilisateur, exposé à un risque de chute, est relié par une longe. Un tel équipement permet à cet utilisateur de se déplacer sur un plan sensiblement horizontal tout en restant constamment protégé contre le risque de chute.

Le dispositif décrit ci-dessus est utilisé dans ce type d'équipement en fixant un tube tel que ci-dessus sur chacun des ancrages d'extrémité sur lequel est fixé le câble horizontal. Chaque extrémité du câble est passée dans le tube correspondant. Une pièce mobile, telle que mentionnée ci-dessus, est fixée à chacune des extrémités du câble et à l'extrémité du tube correspondant extérieure à l'installation, de façon à constituer une retenue pour l'extrémité correspondante de ce câble. En cas de chute de l'utilisateur, le câble constituant la ligne de vie est sollicité énergiquement vers le bas à l'endroit où se trouve l'ancrage mobile, ce qui provoque une sollicitation énergique des extrémités du câble dans l'axe et vers l'intérieur des deux tubes, entraînant chaque pièce mobile dans le tube correspondant. Un tel système est décrit dans le brevet européen N° 0 605 538 et dans le brevet des Etats-Unis d'Amérique N° 5 458 221.

Un système tel que décrit ci-dessus présente l'inconvénient d'avoir un effet de freinage dont la progressivité est réduite et ne peut être prédéterminée avec précision. Il nécessite en outre un procédé de lubrification des surfaces en contact de frottement entre la pièce mobile et le tube, lubrification qui fait particulièrement l'objet du brevet européen N° 0 605 538 (ou du brevet des Etats-Unis d'Amérique N° 5 458 221). En outre l'intervention d'un tel système en cas de chute de la charge, provoque la détérioration du tube, donc du dispositif.

Le brevet des Etats-Unis d'Amérique N° 5 174 421 décrit un dispositif amortisseur-absorbeur de chocs pour siège de véhicule automobile. Le dispositif comprend un piston monté pour pouvoir coulisser, dans deux directions opposées, à l'intérieur d'un tube en un matériau thermoplastique serré dans un boîtier métallique fixe guidant le coulissement de la tige du piston, dont une extrémité est fixée au siège de véhicule. Le diamètre extérieur du piston est supérieur au diamètre intérieur du tube, de sorte qu'en cas de choc le piston se déplace à l'intérieur de celui-ci en déformant la paroi du tube et en dissipant l'énergie due au choc. En raison de sa matière constitutive, le tube reprend par élasticité son diamètre d'origine. Dans ce dispositif, qui concerne un domaine d'application bien différent de celui de l'invention (absorption des chocs appliqués à un siège de véhicule et non pas freinage de la chute d'un utilisateur), la pièce mobile est disposée au repos à l'intérieur du corps déformable et non pas à l'extérieur de celui-ci. De plus le boîtier assurant la fixation et le serrage du tube déformable en matériau thermoplastique est un élément séparé en métal, contrairement au dispositif selon l'invention où l'élément de réception constitue une pièce monobloc en matière élastique qui participe dans son ensemble au freinage et à l'amortissement de la chute de la charge.

La présente invention a pour objet de remédier aux inconvénients ci-dessus mentionnés des dispositifs de freinage connus et elle propose à cet effet de réaliser un système de freinage pour la chute d'une charge, notamment dans un équipement de ligne de vie, permettant d'améliorer la progressivité du freinage de la chute, et d'en prédéterminer le niveau et l'évolution, sans qu'un procédé de lubrification soit utile, et tout en permettant la récupération des pièces du système de freinage après son fonctionnement, pour leur réutilisation ultérieure. A cette fin, le dispositif pour le freinage de la chute d'une charge, et plus spécialement d'une personne, selon la présente invention, est du type comportant une pièce mobile, à laquelle la charge est reliée, pénétrant et coulissant, sous l'effet de l'accélération de cette charge, dans le logement longitudinal d'un élément fixe de réception, dont le diamètre intérieur initial est inférieur à la largeur de la pièce mobile , afin que l'élément de réception, par sa déformation sous la force radiale de la pièce mobile, absorbe l'énergie produite par la chute de la charge et, par là, freine cette chute. Il se caractérise en ce que l'élément de réception est constitué d'un corps déformable élastiquement sous la force radiale exercée par la pièce mobile de sorte que la progressivité du freinage de la pièce mobile puisse être prédéterminée par la forme et les dimensions de cet élément et que celui-ci reprenne sa forme et ses aptitudes initiales après extraction de la pièce mobile, l'élément de réception formant une pièce monobloc de fixation sur une structure d'accueil, de sorte que toute la matière élastique de cette pièce participe, par son élasticité, au freinage et à l'amortissement de la chute de la charge.

Avantageusement, la section du corps élastique de l'élément de réception, transversalement au trajet de la pièce mobile , présente une épaisseur croissante dans le sens de ce trajet, de façon à organiser un freinage croissant de la pièce mobile au cours de son trajet, par l'effet de réaction de la masse de matière entourant le logement longitudinal.

Ainsi, le volume et la répartition du matériau déformable élastiquement, combinés au module d'élasticité de celui-ci, permettent de réaliser une progressivité améliorée et prédéterminée de l'effet de freinage suivant une fonction calculée, en rapport avec le trajet souhaité de la pièce mobile à l'intérieur de l'élément de réception. En effet, l'épaisseur de matériau élastique entourant le logement longitudinal, à l'endroit où se trouve la pièce mobile à un instant de son parcours dans ce logement longitudinal, détermine un niveau de réaction à la force radiale, et donc un niveau de décélération. En déterminant un profil croissant de l'épaisseur de l'élément autour du logement longitudinal, dans le sens de déplacement de la pièce mobile sous l'effet de la chute de la charge, on obtient une progressivité de décélération suivant une fonction calculable affinée par des ajustements successifs au cours d'essais, d'après le comportement d'ensemble de l'équipement.

Afin de compléter la sécurité du dispositif , l'élément de réception comporte avantageusement un épaulement dans son perçage longitudinal fournissant une butée d'arrêt pour le déplacement de la pièce mobile lorsque celle-ci est sollicitée par la chute de la charge.

Selon une réalisation préférée de l'invention, l'élément de réception de la pièce mobile est incorporé de façon monobloc dans la pièce d'ancrage retenant l'extrémité du lien auquel est amarrée ou reliée la charge. Ainsi l'ensemble de cette pièce d'ancrage forme le corps de l'élément de réception et participe par son élasticité à l'amortissement de la chute de la charge. Cette forme de réalisation présente en outre un avantage de coût par la simplicité de fabrication de la pièce monobloc.

L'étude de réalisation de l'invention a montré que le polyuréthanne constitue un matériau particulièrement adapté à la fonction de l'élément de réception, par son coefficient d'élasticité et sa résistance vis-à-vis de l'énergie à absorber dans les applications prévues. Toutefois un autre matériau approprié pourrait être choisi pour d'autres applications.

Pour bien faire comprendre l'invention on en décrira ci-après, à titre d'exemple sans caractère limitatif, une forme de réalisation préférée en référence au dessin schématique annexé dans lequel :
la figure 1 est une vue perspective partielle d'une ligne de vie selon l'invention montrant en particulier un ancrage d'extrémité et un ancrage intermédiaire de celle-ci ;
la figure 2 est une vue perspective d'un ancrage d'extrémité de la ligne de vie de la figure 1 ;
la figure 3 est une vue de côté, partiellement en coupe verticale, de l'ancrage d'extrémité de la figure 2, la pièce mobile qui l'équipe étant représentée en position de repos ;
et la figure 4 est une vue analogue à la figure 3, la pièce mobile s'étant engagée dans le logement de l'élément de réception de l'ancrage d'extrémité, au cours de sa fonction de freinage de la charge.

En référence au dessin, on a représenté en 1 un ancrage d'extrémité d'une ligne de vie comprenant deux câbles parallèles sensiblement horizontaux 2 reliés à une extrémité à l'ancrage 1 et, à leur extrémité opposée, à un ancrage d'extrémité identique (non représenté au dessin). A écartement régulier, le long des câbles 2, sont disposés des ancrages intermédiaires 12. Sur les câbles 2 circule, de façon connue en soi, un coulisseau 3 formant ancrage mobile auquel un utilisateur peut être relié par une longe (non représentée).

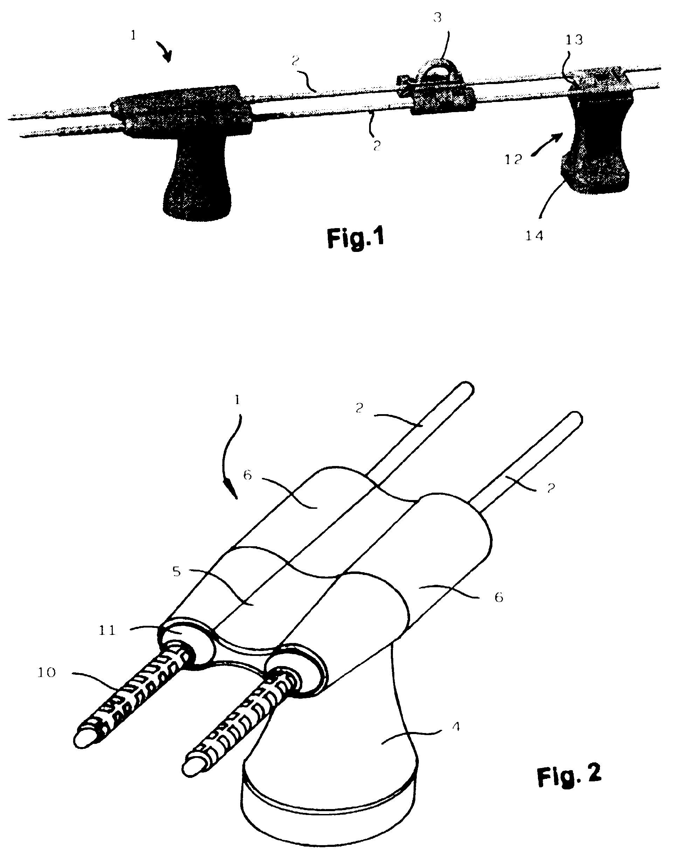

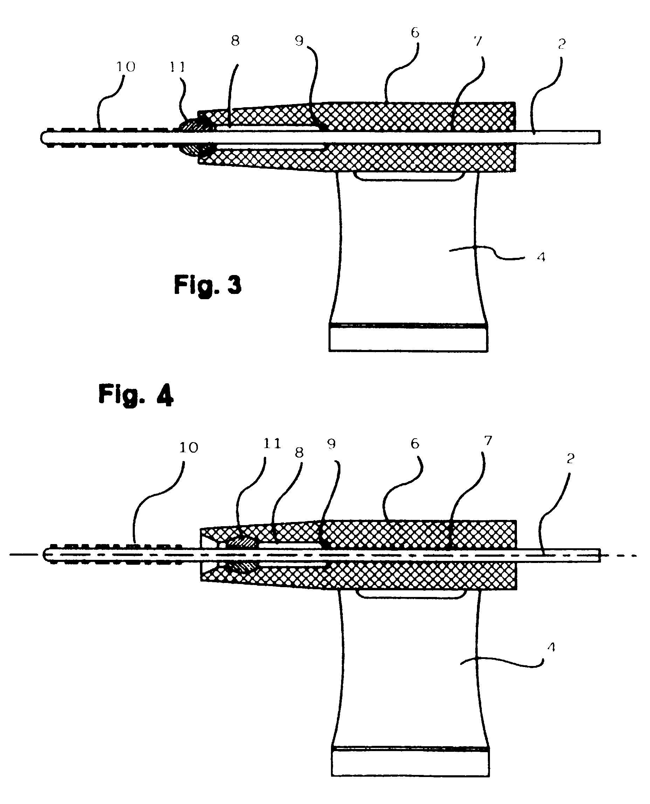

L'ancrage d'extrémité 1 comprend, représentés aux figures 2 à 4 et réalisés en un seul bloc de matériau élastique polyuréthanne moulé, un socle 4 destiné à être fixé (par exemple par boulonnage) à une structure d'accueil telle qu'un plancher, plafond ou mur (non représenté) et un élément de réception 5 qui prolonge le socle 4 à son extrémité supérieure. L'élément de réception 5 a une orientation sensiblement horizontale et présente deux parties renflées 6 parallèles qui sont symétriques par rapport à un plan vertical longitudinal médian.

Chaque partie renflée 6 comporte un perçage longitudinal axial 7, pour le passage d'un câble 2, et se poursuit vers l'arrière par un logement longitudinal 8 de plus grand diamètre. Un épaulement 9 relie le perçage 7 et le logement 8.

Chaque câble 2 traverse axialement la partie renflée 6 correspondante et, sur son extrémité qui fait saillie vers l'arrière hors de la partie renflée 6, est serti un manchon 10.

Comme on le voit au dessin, la partie arrière de chaque renflement 6, entourant le logement longitudinal 8, présente une forme conique allant en se rétrécissant de l'avant vers l'arrière, de façon que l'épaisseur de matériau élastique entourant le logement longitudinal 8 aille en augmentant de l'arrière vers l'avant de celui-ci.

A l'extrémité arrière de l'ancrage d'extrémité 1, c'est-à-dire à l'extrémité opposée à celle située du côté de la ligne de vie, se trouve une pièce mobile 11, par exemple en forme d'olive, traversée par un câble 2 et qui présente un diamètre extérieur supérieur au diamètre intérieur du logement longitudinal 8 correspondant. La pièce mobile 11 est bloquée, par le manchon 10 serti sur le câble 2 , contre l'extrémité ouverte du logement 8.

En cas de chute accidentelle de l'utilisateur relié, par l'intermédiaire de l'ancrage mobile 3, à la ligne de vie, une traction vers l'avant se trouve automatiquement appliquée à la partie des câbles 2 reliée à l'ancrage 1, sous l'effet de l'accélération de la charge, en provoquant la pénétration et le coulissement de chaque pièce mobile 11 à l'intérieur du logement longitudinal 8 correspondant. Ce déplacement des pièces mobiles 11 dans les logements 8 entraîne la déformation du matériau élastique de la partie conique des parties renflées 6, sous l'effet de la force radiale des pièces mobiles 11, et assure le freinage et l'immobilisation des pièces mobiles et donc celui de la charge reliée aux câbles 2 en absorbant l'énergie produite par la chute de la charge.

La répartition du matériau élastique constituant l'entourage des logements longitudinaux 8, et en particulier la forme conique de cet entourage, permet d'obtenir une progressivité améliorée et prédéterminée de l'effet de freinage.

La présence de l'épaulement 9 dans le fond de chaque logement longitudinal 8 complète la sécurité en fournissant une butée d'arrêt pour le déplacement de la partie mobile 11 correspondante, lorsque celle-ci est sollicitée par la chute de la charge.

Les ancrages intermédiaires 12, destinés à éviter une déflexion trop importante des câbles 2 lors d'une chute, sont constitués chacun en deux pièces (voir figure 1) c'est-à-dire une pièce supérieure 13 métallique ou en matériau composite (par exemple en aluminium extrudé ou en composite fibre de verre), qui permet le passage facile du coulisseau 3 sur l'ancrage, et un fût 14 en polyuréthanne surmoulé autour de la pièce 13. En cas de chute, comme pour l'ancrage d'extrémité 1, une fraction de l'énergie est dissipée grâce au matériau et grâce à la géométrie de l'ancrage, le fût 14 fléchissant par déformation élastique et reprenant sa forme initiale après l'arrêt de la chute.

On comprendra que la description qui précède a été donnée à simple titre d'exemple, sans caractère limitatif, et que des adjonctions ou des modifications constructives pourraient y être apportées sans sortir du cadre de l'invention.

On notera ainsi qu'on a décrit l'élément de réception de l'ancrage d'extrémité comme étant constitué de polyuréthanne, matériau qui est particulièrement adapté à la fonction de cet élément en raison de son coefficient d'élasticité et de sa résistance vis-à-vis de l'énergie à absorber dans les applications prévues, mais qu'un autre matériau approprié pourrait être choisi pour une autre application.

On notera aussi que l'élément de réception peut comporter plusieurs logements longitudinaux parallèles, coopérant chacun avec une pièce mobile, les différentes pièces mobiles étant reliées à des charges distinctes ou à une charge commune.

## Revendications

1. Dispositif pour le freinage de la chute d'une charge, et plus spécialement d'une personne, comportant une pièce mobile (11) à laquelle la charge est reliée, pénétrant et coulissant, sous l'effet de l'accélération de cette charge, dans le logement longitudinal (8) d'un élément fixe de réception (6), dont le diamètre intérieur initial est inférieur à la largeur de la pièce mobile (11), afin que l'élément de réception (6) par sa déformation sous la force radiale de la pièce mobile (11), absorbe l'énergie produite par la chute de la charge et, par là, freine cette chute, caractérisé en ce que l'élément de réception(6) est constitué d'un corps déformable élastiquement sous la force radiale exercée par la pièce mobile (11) de sorte que la progressivité du freinage de la pièce mobile (11) puisse être prédéterminée par la forme et les dimensions de cet élément (6) et que celui-ci reprenne sa forme et ses aptitudes initiales après extraction de la pièce mobile (11), l'élément de réception (4,6) formant une pièce monobloc de fixation sur une structure d'accueil , de sorte que toute la matière élastique de cette pièce (4,6) participe, par son élasticité, au freinage et à l'amortissement de la chute de la charge.

2. Dispositif selon la revendication 1, caractérisé en ce que la section du corps élastique de l'élément de réception (6), transversalement au trajet de la pièce mobile (11), présente une épaisseur croissante dans le sens de ce trajet, de façon à organiser un freinage croissant de la pièce mobile (11) au cours de son trajet, par l'effet de réaction de la masse de matière entourant le logement longitudinal (8).

3. Dispositif selon la revendication 1 ou la revendication 2, caractérisé en ce que le logement longitudinal (8) de l'élément de réception (6) comporte un épaulement (9) fixant une limite au déplacement de la pièce mobile (11).

4. Dispositif selon l'une quelconque des revendications 1 à 3, caractérisé en ce que l'élément de réception (6) est constitué au moins partiellement de polyuréthanne, pour fournir une élasticité adaptée aux efforts exercés et à la progressivité de freinage souhaitée dans les applications selon l'invention.

5. Ligne de vie pour protéger les personnes contre les chutes, comprenant au moins un câble (2) sensiblement horizontal fixé à deux ancrages d'extrémité (1) et sur lequel circule un ancrage mobile (3) auquel un utilisateur, exposé à un risque de chute, est relié par une longe, des ancrages intermédiaires (12) étant disposés à intervalles réguliers le long du dit câble (2), caractérisé en ce que chaque ancrage d'extrémité (1) comprend un dispositif de freinage selon l'une quelconque des revendications 1 à 4, la pièce mobile (11) du dispositif de freinage étant placée sur le câble (2) à l'extrémité de l'élément de réception (5) opposée à celle qui est située du côté de la section de ligne de vie sur laquelle s'exerce la sollicitation de la charge, de façon à constituer un point de retenue pour l'extrémité de la ligne de vie, et à coopérer avec l'élément de réception (5) pour le freinage de la chute.

6. Ligne de vie selon la revendication 5, caractérisée en ce que chaque ancrage intermédiaire (12) comprend une pièce supérieure métallique ou en matériau composite (13) servant de guide au dit câble (2), et un fût monobloc (14) en matière élastique pouvant fléchir par déformation élastique en cas de chute, et reprenant sa forme initiale après l'arrêt de la chute.

7. Ligne de vie selon la revendication 5 ou 6 comprenant plusieurs câbles parallèles (2), caractérisée en ce que l'élément de réception (5) de chaque ancrage d'extrémité (1) comporte un nombre correspondant de logements longitudinaux parallèles, coopérant chacun avec une pièce mobile (11), les différentes pièces mobiles (11) étant reliées à des charges distinctes ou à une charge commune.
